# EUROPEAN PATENT SPECIFICATION

(11) **EP 3 163 340 B1**
(45) Date of publication and mention of the grant of the patent: **11.10.2023**
(21) Application number: 15192656.5
(22) Date of filing: 02.11.2015
(51) Int. Cl.: G02B 6/293

(54) **METHOD OF FABRICATION OF AN OPTICAL WAVEGUIDE SENSOR AND SUCH OPTICAL WAVEGUIDE SENSOR**
VERFAHREN ZUR HERSTELLUNG EINES OPTISCHEN WELLENLEITERSENSORS UND SOLCH EIN OPTISCHER WELLENLEITERSENSOR
PROCÉDÉ DE FABRICATION D'UN CAPTEUR DE GUIDE D'ONDES OPTIQUE ET UN TEL CAPTEUR

(43) Date of publication of application: 03.05.2017
(73) Proprietor: Haute Ecole Arc, 2000 Neuchâtel (CH)
(72) Inventor: LLERA, Miguel, 2300 La Chaux-de-Fonds (CH); AELLEN, Thierry, 2000 Neuchâtel (CH)
(74) Representative: Bovard SA Neuchâtel

(56) References cited:
- WO-A1-2006/092052
- JUN MA ET AL: "High-sensitivity fiber-tip pressure sensor with graphene diaphragm", OPTICS LETTERS, OPTICAL SOCIETY OF AMERICA, US, vol. 37, no. 13, 1 July 2012 (2012-07-01), pages 2493-2495, XP001576819, ISSN: 0146-9592, DOI: 10.1364/OL.37.002493 [retrieved on 2012-06-20]
- QUEIRÓS ET AL.: "Optical Cavity Fibre Sensor for Detection of Microcystain-LR in Water", PROCEEDINGS OF THE SPIE, vol. 7653, 2010, pages 7653N-1-7653N-4, XP002759404,
- CHEN D ET AL: "Fiber-tip bubble-structure microcavity sensor", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9274, 11 November 2014 (2014-11-11), pages 927414-1-927414-7, XP060043450, DOI: 10.1117/12.2070465 ISBN: 978-1-62841-730-2
- TAN ET AL.: "Polymer Microbubble-Based Fabry-Perot Fiber Interferometer and Sensing Applications", IEEE PHOTONICS TECHNOLOGY LETTERS, vol. 27, no. 19, 19 October 2015 (2015-10-19), pages 2035-2038, XP002759405,
- YU ET AL.: "Pressure Sensing with Optical Fiber-Tip Air Bubbles", PROCEEDINGS OF THE SPIE, vol. 8924, 2013, pages 892430-1-892430-4, XP002759406,
- DENG M ET AL: "Refractive index measurement using photonic crystal fiber-based Fabry-Perot interferometer", APPLIED OPTICS, OPTICAL SOCIETY OF AMERICA, WASHINGTON, DC; US, vol. 49, no. 9, 20 March 2010 (2010-03-20) , pages 1593-1598, XP001552937, ISSN: 0003-6935, DOI: 10.1364/AO.49.001593
- CHEN L H ET AL: "High performance chitosan diaphragm-based fiber-optic acoustic sensor", SENSORS AND ACTUATORS A, ELSEVIER SEQUOIA S.A., LAUSANNE, CH, vol. 163, no. 1, 1 September 2010 (2010-09-01), pages 42-47, XP027383656, ISSN: 0924-4247 [retrieved on 2010-06-30]
- BEARD P C ET AL: "EXTRINSIC OPTICAL-FIBER ULTRASOUND SENSOR USING A THIN POLYMER FILMAS A LOW-FINESSE FABRY-PEROT INTERFEROMETER", APPLIED OPTICS, OPTICAL SOCIETY OF AMERICA, WASHINGTON, DC; US, vol. 35, no. 4, 1 February 1996 (1996-02-01), pages 663-675, XP000630302, ISSN: 0003-6935, DOI: 10.1364/AO.35.000663
- QINGXU YU ET AL: "Pressure sensor based on the fiber-optic extrinsic Fabry-Perot interferometer", PHOTONIC SENSORS, vol. 1, no. 1, 22 November 2010 (2010-11-22), pages 72-83, XP055079215, ISSN: 1674-9251, DOI: 10.1007/s13320-010-0017-9
- HOMSY ALEXANDRA ET AL: "Solid on liquid deposition, a review of technological solutions", MICROELECTRONIC ENGINEERING, vol. 141, 15 June 2015 (2015-06-15), pages 267-279, XP029242313, ISSN: 0167-9317, DOI: 10.1016/J.MEE.2015.03.068
- LEE CHENG-LING ET AL: "Fiber Fabry-Pérot Interferometers Based on Air-Bubbles/Liquid in Hollow Core Fib", IEEE PHOTONICS TECHNOLOGY LETTERS, IEEE SERVICE CENTER, PISCATAWAY, NJ, US, vol. 26, no. 8, 1 April 2014 (2014-04-01), pages 749-752, XP011543777, ISSN: 1041-1135, DOI: 10.1109/LPT.2014.2303191 [retrieved on 2014-03-20]
- LI Z ET AL: "Compact optical path scanner and its application for decoding fiber-optic interferometers", OPTICS LETTERS, OPTICAL SOCIETY OF AMERICA, US, vol. 35, no. 8, 15 April 2010 (2010-04-15) , pages 1284-1286, XP001553253, ISSN: 0146-9592, DOI: 10.1364/OL.35.001284

## Description

### Technical Field

The present invention is related to miniature waveguide sensors. More particularly, the present invention relates to optical measurement systems based on Fabry-Perot waveguide tip sensors for measuring physical parameters such as pressure, temperature, force, vibration and for applications wherein the available measurement space is small.

### Background of the invention

The use of optical waveguide sensors, in particular fiber sensors in a wide range of environments is becoming of a vital importance for many industries such as cars, aeronautics, military, oil wells, medical applications. Optical waveguide and fiber sensors have been developed for decades for applications requiring the measurement of vibration, acceleration, presence of objects, temperature, pressure or a combination of them. Optical waveguide and optical fiber sensors are particularly useful for the measurement of physical parameters in small volumes that may be located at long distances relative to the light source that provides the guided light in these sensors. These physical parameters may be temperature, pressure, vibration, force and so on. Optical fiber sensors may have distributed sensing structures such as distributed grating structures arranged along the length of the fiber or they may have fiber tips arranged to the fiber that comprise cavities. Optical fiber sensors in particular allow making measurements in strong electromagnetic environments and also in harsh environments and are able to achieve very high sensitivities.

A general overview of the variety of fiber optical sensors may be found in the publication: "Fiber optic sensors", edited by F.Yo and S.Yin, Pennsylvania State University, ed. Marcel Dekker Inc., New York, 2002, ISBN 0-8247-0732-x.

Optical waveguide sensors and particularly optical fiber sensors based on Fabry-Perot cavities have been widely explored over the last two decades. Fabry-Perot fiber sensors may be classified as extrinsic Fabry-Perot configurations or intrinsic Fabry-Perot Configurations.

S.J.Petuchowski et al. describe an extrinsic Fabry-Perot fiber sensor in the article: S.J.Petuchowski et al., "A sensitive fiber-optic Fabry-Perot interferometer", IEEE of Quantum Electronics 17 (1981), PP.2168-2170.

An intrinsic Fabry-Perot optical fiber sensor is described in : C.E.Lee et al, "Interferometric Optical fiber sensors using internal mirrors", Electronics letters 24, (1988), pp.193-194.

In particular, prior art discloses how to provide pressure sensors at the tip of an optical fiber or an optical waveguide. For example, the document WO 02/23148 (Wilner et al.) describes a housing made from silicon in which the end section of a lead fiber end and a silicon diaphragm are fixed. The flat cleaved fiber end and the diaphragm form two reflective surfaces that define a Fabry-Perot interferometer. The optical signal from the lead optical fiber is split into two paths, which mutually interfere. The sum of their interference is function of the distance between the fiber end and the diaphragm position, which is function of the pressure. By adapting the housing and the diaphragm the system could be used to measure also the temperature, vibrations or accelerations.

Recently a fiber optic Fabry-Perot interferometer has been proposed based on a hollow core fiber forming a cavity that comprises a liquid and an air bubble: C.L. Lee et al "Fiber Fabry-Perot interferometer based on Air-Bubbles/Liquid in Hollow core Fibers", IEEE Photonics Technology Letters, vol 26, nr.8, April 15, 2014, pp. 749-752. As the air-bubble in C.L.Lee et al is surrounded by liquid the fiber sensor is highly sensitive to temperature since the thermal expansion coefficient of the air and the liquid are much higher than that of solid silica. The system requires a rigid taper plug to seal off the fiber tip cavity. In order to keep in place that plug an epoxy layer has to be applied to the plug and the surrounding hollow core fiber. This makes the process complicated and expensive as it would not be possible to realize the device in a batch process. Another issue is that the system is not adaptable to measure pressure as the tip is completely rigid. The main shortcoming of the device is that the measurement range is limited by the possibility that the filling of the liquid could break through the fiber taper plug if the internal pressure increases too much upon heating. The measurement range is also limited by the free spectral range (FSR) of the interference fringes. Interference dips may overlap under a large variation of temperature. The sealing by an epoxy layer is another shortcoming as the epoxy-taper plus cannot withstand temperatures higher than 39°C. At that temperature the volumes of air and liquid cease to be constant.

Another document, Li et al. in Optics Letters 35, 8, pp.1284-1286, 2010 , describes a compact optical path scanner and its application for decoding fiber-optical interferometers. The device requires the use of an epoxy glue which limits the sensitivity of the sensors. Furthermore, the use of an epoxy to encapsulate the liquid inside the hollow fiber does not allow to provide the sensor to measure forces, or as contact sensor, because the flexibility of the glue does not allow to sense its deformation by an applied force.

Different sensors in the related field of the invention are disclosed in: Homsy et al., Microelectronics Engineering 141, pp.267-279, 2015. In Homsy et al., a liquid drop is arranged at a fiber tip which is then encapsulated. The document of Homsy et al relates to deformable drops that produce varying reflectivities when the deposited drop is deformed. However, this solution is unpracticable as the forces exerted on the drop could make it move in any direction and hence it would not be possible to calibrate the sensor.

### Summary of the invention

An object of the present invention is to propose a new optical Fabry-Perot waveguide sensor according to independent claim 9 for detecting the physical parameters such as pressure, force and the temperature at an optical cavity, comprising a deformable membrane, which is arranged at an end of the waveguide sensor, and to overcome at least partially the limitations of optical waveguide sensors of prior art. But fabricating such a Fabry-Perot waveguide sensor is definitely not that simple.

To this end, the present invention concerns a manufacturing method of an optical waveguide sensor accoring to independent claim 1 inter alia comprising:
- an optical waveguide having a first end adapted to receive a light source, and a second end opposite to that first end;
- an optical cavity, adapted to the optical waveguide, having an entry arranged adjacent or fixed to said second end so as to receive an incident light beam from the optical waveguide. The optical cavity has an exit situated opposite to its entry and closed by a deformable membrane.

The method for fabricating the deformable membrane comprises the steps of:
- adhering a liquid drop to the exit such that it provides a convex surface protruding outside the exit;
- depositing the deformable membrane by a solid-on-liquid deposition technique on the external surface of said convex surface;
- depositing a reflecting layer on the external surface of said deformable membrane.

In an embodiment of the method, the deformable membrane is a parylene membrane deposited by vapor deposition.

In an embodiment of the method, the optical cavity comprises a capillary hollow core defining the exit and the capillary hollow core diameter is sized in reference to the liquid viscosity such that said liquid can be sucked at least partially inside the capillary hollow core and form said convex surface.

In an embodiment of the method, the step of adhering a liquid drop is performed by:
- dipping a rod into a liquid so as to provide a quantity of liquid onto a first face of said rod;
- aligning and moving said first end of said rod to said exit until said liquid is in contact with the exit and is sucked inside the capillary hollow core and removing said rod.

In an embodiment of the method the optical waveguide is an optical fiber which is assembled to the capillary hollow core with the following steps:
- providing a cleaved optical fiber with a cleaved end;
- providing a protective tube which is sized such that the optical fiber can be inserted into it;
- inserting said cleaved end of the optical fiber into said protective tube over a predetermined distance;
- moving the protective tube in the direction of said first face and to a predetermined position such that the cleaved end is outside the protective tube, and;
- providing said optical cavity;
- aligning and fusion splicing the entry to the cleaved end, providing a fusion splice;
- moving the protective tube such that the protective tube 12 covers said fusion splice and fixing the protective tube to the lead optical fiber, to the side of said first end.

In a variant of the method the optical cavity is furthermore cleaved at a predetermined position in order to adjust the length of the optical cavity.

Said protective tube can be a glass tube or a ceramic tube.

The invention is further achieved by a Fabry-Perot optical sensor, obtainable by the described method and comprises:
- an optical waveguide with a first end adapted to receive a light source, and a second end opposite to the first end;
- an optical cavity with an entry arranged adjacent to said second end so as to receive an incident light beam from the optical waveguide, the optical cavity having an exit situated opposite to the entry.

In the Fabry-Perot optical sensor the exit is closed by a deformable membrane. A reflecting surface is facing said second end and is arranged to reflect at least partially incident light incoming into the optical cavity.

The optical cavity comprises at least a longitudinally traversing hollow core connecting said entry and said exit, and comprises a volume of air situated to the side of said entry and a volume of liquid situated to the side of the deformable membrane. The volume of liquid is in contact with said deformable membrane and with said exit and, said volume of air is in fluidic connection, by said volume of liquid, with said deformable membrane. Instead of air another gas may be used such as Argon. The diameter of said hollow core is chosen preferably to have a dimension substantially equal to the diameter of the core of said optical waveguide.

In an embodiment, the liquid in the optical cavity is oil.

The deformable membrane comprises a reflecting layer. This reflecting layer comprises at least a reflecting surface to the side of said exit.

In an embodiment the deformable membrane is made of parylene.

In an embodiment of the invention the optical waveguide is an optical fiber.

In another embodiment the optical waveguide is arranged on a substantially flat substrate. This optical waveguide may be on the surface of the flat substrate or may be positioned inside the flat substrate.

In an embodiment the optical cavity is a hollow core optical fiber that may comprise a central traversing hole and also several lateral traversing holes, said central traversing hole and said several lateral traversing holes being defined as longitudinal apertures defined in the direction between said entry and said exit.

### Brief description of the drawings

- Fig. 1 Illustrates a Fabry-Perot optical sensor comprising an optical cavity closed with a deformable membrane and comprising an air volume and a liquid volume;
- Fig. 2 illustrates another Fabry-Perot optical sensor comprising an optical cavity that is a hollow core fiber section;
- Fig. 3 illustrates a Fabry-Perot optical sensor based on a substrate that comprises an optical waveguide on its surface;
- Fig. 4 shows a cross section of an optical cavity arranged on a substrate comprising an optical waveguide inside the substrate;
- Fig. 5 shows a Fabry-Perot optical sensor comprising a plurality of Fabry-Perot optical sensors;
- Fig. 6 shows a Fabry-Perot optical sensor comprising a plurality of optical cavities, each comprising a deformable membrane, arranged on a flat waveguide substrate ;
- Figs. 7 to 17 illustrate different steps of the method according to the invention;
- Fig. 18 shows a Fabry-Perot optical sensor not according to the invention and having an optical cavity comprising a reflecting element positioned between an air volume and a liquid volume;
- Fig. 19 and Fig. 20 show the response signal of an exemplary Fabry-Perot sensor of the invention, respectively a reference signal, upon a changing pressure outside the optical cavity;
- Fig. 21 and Fig. 22 show the response signal of an exemplary Fabry-Perot sensor of the invention, respectively a reference signal, upon a pressure cycle applied on the deformable membrane of an optical cavity;
- Fig. 23 show the response signal of an exemplary Fabry-Perot sensor, respectively a reference signal, upon the application of different forces on the deformable membrane of an optical cavity;
- Fig. 24 shows the linear relation between the applied force and the response signal of an exemplary Fabry-Perot sensor;
- Fig. 25 and Fig. 26 show the response signal of a Fabry-Perot sensor, respectively a reference signal, upon a raising temperature outside the optical cavity;
- Fig. 27 and Fig. 28 show the response signal of a Fabry-Perot sensor, respectively a reference signal, upon a lowering temperature outside the optical cavity.

### Detailed description

The invention mainly concerns a method for manufacturing an optical Fabry-Perot sensor comprising an optical waveguide and an optical cavity comprising a volume of air and a volume of liquid to which a deformable membrane is arranged.

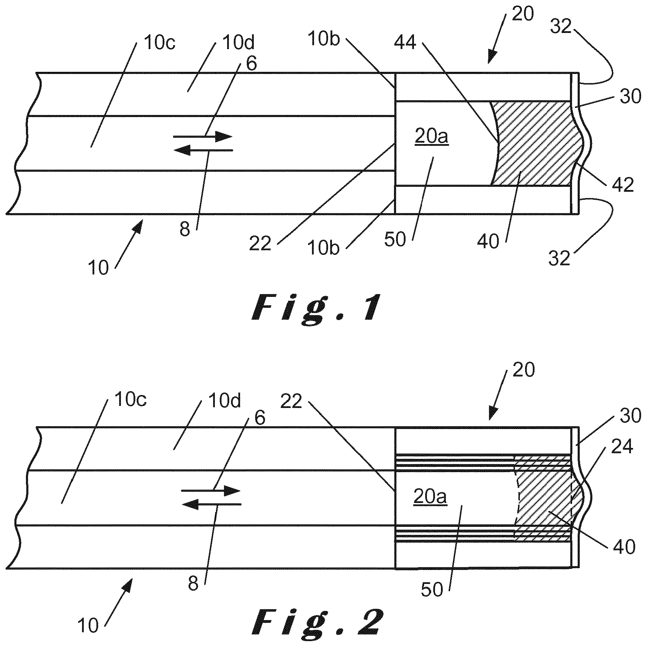

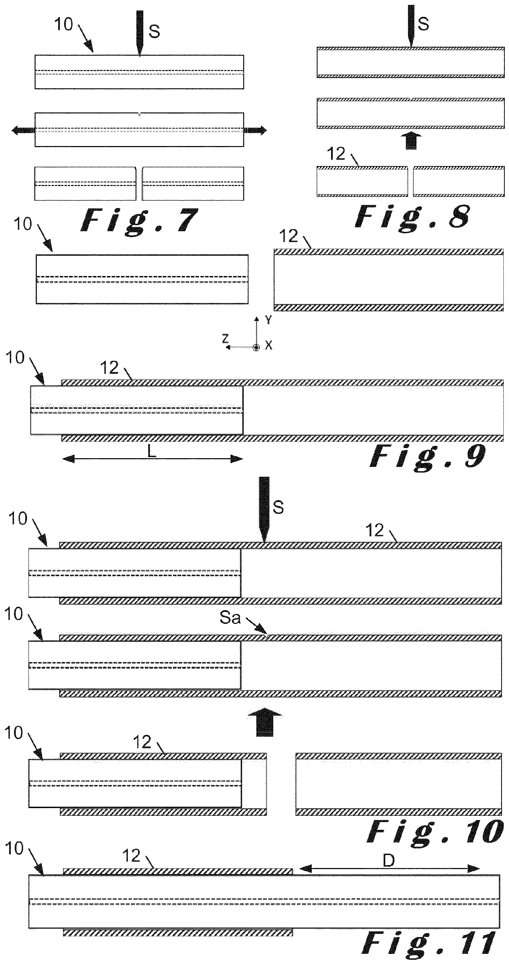

In a preferred embodiment of the method, the manufacturing concerns a fiber optical Fabry-Perot sensor as illustrated in Fig.1, wherein the optical waveguide is an optical fiber. The manufacturing of the fiber optical Fabry-Perot sensor is described in reference to Figs. 7 to 17, which illustrate the required steps of the manufacturing method.

The first step of the manufacturing method, shown in Fig. 7 is to provide an optical fiber 10 on which a protective coating is stripped over a certain length, which is cleaned and precisely cleaved. Cleaving can be carried out by scribing with a scribing tool S and tensing, so as to provide a very flat surface perpendicular to the core of the optical fiber. The optical fiber may be a monomode fiber or a multimode fiber, or a multicore fiber comprising a central core, and may have an outside diameter in the range of 50 µm to 500µm, preferably in the range of 20 µm to 500µm. It is understood that other fiber sizes are possible as well and the length of the optical fiber 10 depends on the application. Different types of optical fiber 10 may be used, such as for example glass optical fibers, plastic optical, sapphire, chalcogenide fibers.

Other cleaving techniques of the optical fiber 10 can be used to obtain the very flat surface 10a, such as laser techniques.

In a second step shown in Fig. 8 a protective capillary tube 12 is placed on the optical fiber. The protective capillary tube may be cleaved following a similar procedure as usual for standard optical fibres except that a capillary cannot be tensed. The protective capillary tube 12 is cleaved so as to provide a predetermined length as illustrated in Fig. 8. Preferably a glass or ceramic protective capillary tube 12 is used but other materials may be used as well, such as metal or plastic. Instead of a longitudinal tensile force, a lateral force is applied in order to cleave the protective capillary tube or cutting of the capillary. Other cleaving techniques can be used such as laser cutting techniques.

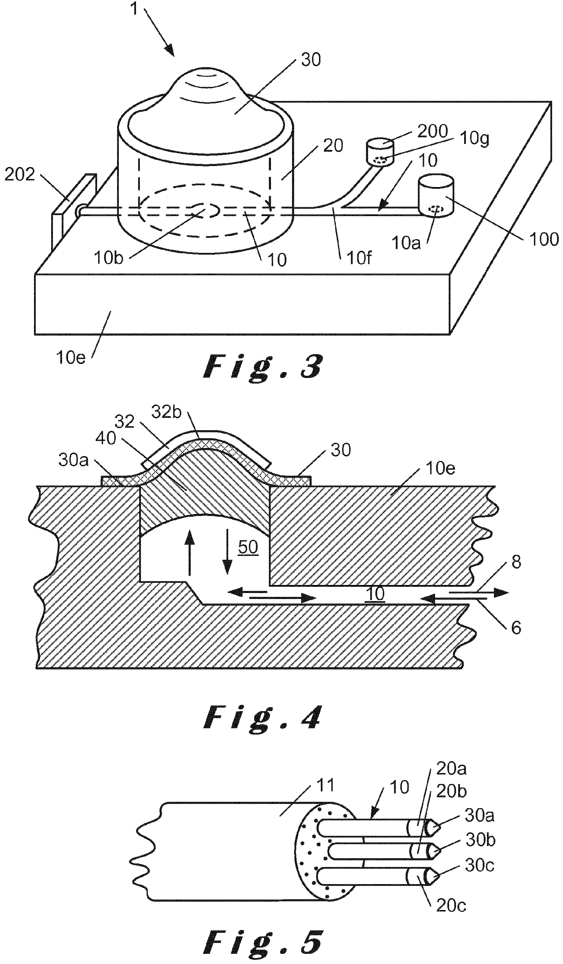

In a third step, the protective capillary 12 and the cleaved end of the optical fiber, also defined as the second end 10b are aligned, as illustrated in Fig.9. The second end 10b is the end of the optical fiber 10 that provides, in use of the optical sensor, a light beam emitted from a light source that is adapted to a first end 10a of the optical fiber 10. The optical fiber is arranged to guide an incoming beam 6 and an outcoming beam 8 similar to respectively the incoming optical beam 6 and the outcoming optical beam 8 of the embodiment of the device illustrated in Fig.4.

The stripped and cleaved fiber section can be partially introduced in the protective capillary 12 as shown in Fig.9. The insertion length L is typically at least 10 mm, but other lengths may be used as well, depending on the application and the dimensions of the optical fiber 10 and the optical cavity 12. The alignment between said second end 10b and the protective capillary 12 may be done with any X, Y and Z alignment system but will be preferably done with an optical fiber splicing system equipped with such alignment ability.

In a fourth step, the protective capillary 12 is cleaved at a cleave location Sa as illustrated in Fig.10. Depending of the final length to be protected by the protective capillary 12, the fiber will be manually pushed further into the protective capillary 12 until a predetermined length D of the optical fiber 10 protruding said protective capillary 12 is obtained, as illustrated in Fig.11. The fiber tip, comprising said second end, must remain free for over said predetermined length D of about 5-10 mm as shown in Figure 11. A cleaving process as described above can be used, but other cleaving techniques can also be used.

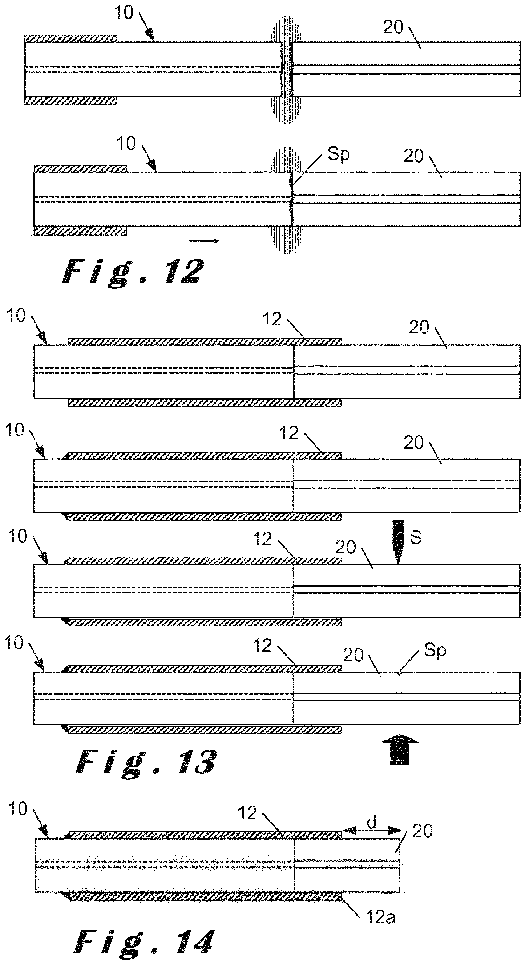

In a fifth step, illustrated in Fig. 12, an optical cavity 20 is provided which may be a glass or ceramic capillary or hollow core fiber or a capillary fiber. The optical cavity may also be made of another material such as plastic or metal or a semiconductor, or may comprise a combination of these materials. The optical cavity has an entry 22 and an exit 24 as illustrated in Figs. 1 and Fig. 2. The choice of the type of the optical cavity 20 depends on the configuration chosen.

The fiber 10 is spliced to an optical cavity 20 as shown in Fig. 12. The splice between the optical fiber's second end 10b and the entry 22 will be preferably performed by using a filament fusion splicer but other fusion fiber splicers could be used, such as laser welding, soldering by applying possible additional materials and so on.

In a sixth step, the optical cavity 20 is cleaved to provide an exit 24,as illustrated also in Fig.2, which is very flat and perpendicular to the optical axis of the optical cavity 20.

Before cleaving, the splice between said entry 22 and said second end 10b is protected by the protective capillary tube 12. To achieve this, the protective capillary tube 12 is pushed towards the splice location Sp as illustrated in Fig.13. The distance d between the splice and a first end 12a of the protective capillary may be between 100 µm and 1000 µm, preferably between 200 µm and 500 µm, more preferably between 200µm and 300µm as shown in Fig. 14 Once the protective capillary tube 12 has been placed on the predetermined position, it is fixed to the optical fiber surface, preferably by gluing, at its second end away from the optical cavity. Other methods of fixing the protective capillary 12 to the optical fiber 10 may be used, such as thermal techniques or laser welding techniques or mechanical techniques.

The cleaving of the optical cavity is illustrated in Fig.13. The cleaving is done preferably at a distance between 300 µm - 700 µm from the end 12a but may but can also be performed at other distances as well, depending on the desired total length of the optical cavity and so on the feedback spectrum that is needed. Fabry-Perot interferometers are well known to the skilled person and are not further described here. In order to cleave the optical cavity 20, a cleaving process as described above may be used, but other cleaving techniques can also be used.

The fabrication of a deformable membrane is a main aspect of the invention and the corresponding steps are described hereafter.

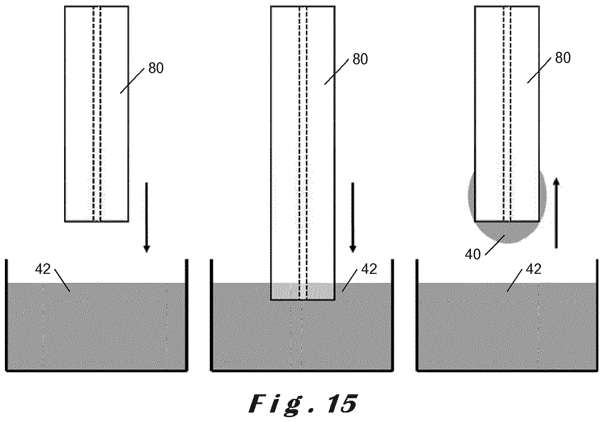

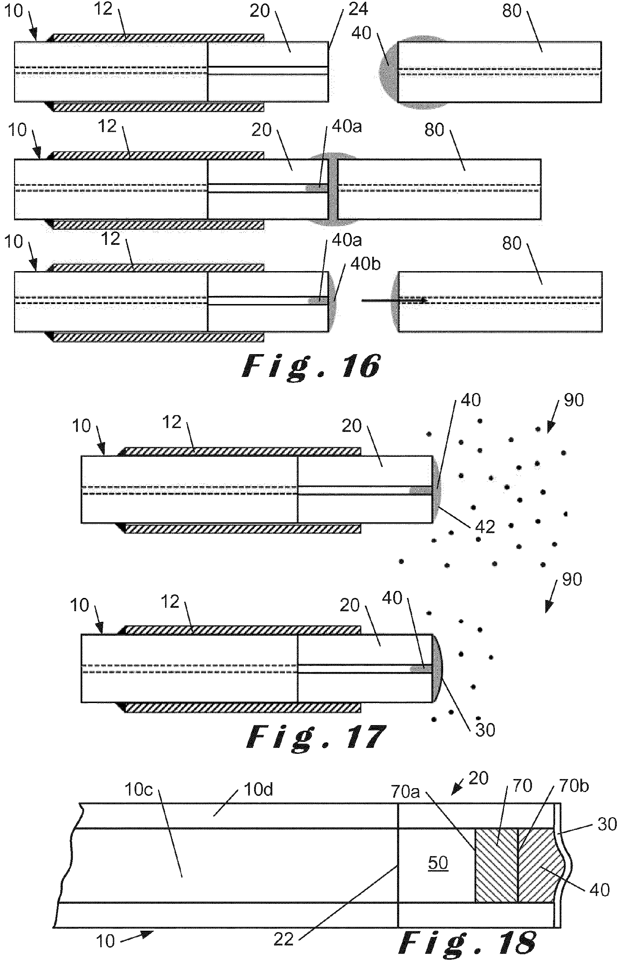

In a seventh step, illustrated in Fig. 16, a liquid 40 is deposited to the exit 24 of the optical cavity 20. The liquid 40 may be oil, or may be water or any other optically transparent liquid. Oil is a preferred liquid. The liquid deposition is performed by using a separate rod 80, which is preferably a fiber or fiber tip, or a capillary that is imbibed at an extremity with liquid by transferring the tip into a liquid reservoir 42 as illustrated in Fig.15. Then, the imbibed extremity of the rod is manually or automatically aligned with the exit 24 of the optical cavity 20 and is subsequently put in contact to it, so that liquid 40 wets the exit 24 of the optical cavity 20 by capillarity. The liquid may comprise additives to improve the adherence to the exit 24. The volume 40a of liquid that is diffused into the optical cavity 20 depends on the used materials of the optical cavity 20, on the diameter and shape of the hollow core 20 of the optical cavity 20 and the property of the liquid 40. Once the liquid 40 has penetrated partially into the optical cavity 20 the rod 80 is withdrawn, a portion 40b of the liquid protrudes said exit 24 and a convex liquid surface 40b is formed, facing said exit 24, as illustrated in Fig.16.

In an eight step, illustrated in Fig.17, a deformable membrane 30 is formed on the convex liquid surface 42. Techniques called solid-on-liquid deposition are used to realize the deformable membrane. Such techniques are described in A.Homsy, "Solid on liquid deposition, a review of technological solutions", Microelectronic Engineering, 2015, nr. 141, pp. 267 - 279. Preferably, the solid molecular precursors 90 are in gaseous phase. Once the liquid 40 has been placed at the exit 24, the vapour deposition of the deformable membrane 30 can be performed. The timing of the deposition of the deformable membrane 30 is an important parameter of the process. In order to assure that the curved surface of said liquid surface 42 stays convex, the deposition of said deformable membrane is performed preferably before one hour after the deposition of said liquid 40, more preferably less than 5 min after the deposition of said liquid 40.

Deposition technique such as for example physical vapour deposition such as thermal evaporation and sputtering, or chemical vapour deposition technique assisted by plasma or not and atomic layer deposition arepreferred. In some embodiment, low vapour pressure liquid are preferred when low pressure deposition processes are required.

In an embodiment of the method parylene is deposited. The process to deposit a parylene layer is described in the document EP 1672394. Depending on the deformable membrane thickness foreseen, an appropriate quantity of parylene is to be prepared. Deformable membranes may have a thickness between 50nm and 250nm and may have a thickness greater than 250nm.

In a ninth step of the method of fabrication, a reflecting layer 32 is deposited on the deformable membrane 30. Fig.4 illustrates such a reflecting layer in the case of an optical cavity arranged on a flat waveguide. The deposition of a reflecting layer 32 aims to enhance considerably the reflectivity of the deformable membrane 30. The nature of the reflecting layer 32 depends on the application and in particular on the used wavelength and the desired fraction of light reflected 8 back into the waveguide 10. The material of the reflecting layer 32 is chosen also in function of the material of the deformable membrane 30. A metallic reflecting layer 32 is preferred. In an embodiment, a gold layer deposition is chosen as the reflecting layer. Deposition techniques of reflective coatings are well known to the skilled person and will not be described here.

In an embodiment of the method of fabrication as described above a waveguide 10 situated on or into a substrate 10e may be used, as illustrated in Fig. 3 and Fig. 4. In the case of a flat substrate 10e comprising a waveguide 10 the methods steps of introducing the liquid 40 in the optical cavity 20 and the formation method of the deformable membrane 30 are similar. The method differs from the method described above in the case of an optical fiber Fabry-Perot sensor, in that the waveguide preparation steps are different and comprise the steps of:
- providing a substantially flat substrate having on its surface a first end 10a and a second end 10b, as illustrated in Fig.3;
- aligning and fixing the optical cavity 20 onto the surface of the substrate 10e or using a predefined optical cavity, as illustrated in Fig. 4.

The invention also concerns a Fabry-Perot optical waveguide sensor 1, which is obtainable by the method described previously. Fig.1 shows an embodiment of a Fabry-Perot optical waveguide sensor 1 in which the optical waveguide 10 is an optical fiber, which may be a monomode fiber or a multimode fiber or a multicore fiber, or a fiber bundle.

The optical fiber 10 comprises a first end 10a to which a light source may be adapted so that a light beam may be coupled in the core of the fiber and a second end, opposite to the first end 10a, which provides the light beam guided by the optical fiber to a cavity arranged to the second end. The optical cavity 20 comprises at least one longitudinally traversing channel 20a and may be a capillary or a portion of a hollow core fiber, or any element having at least one hollow core. The optical cavity 20 is preferably made of glass but may be made of any other material, for example metal or plastic or silicon. The shape of the cross section of the at least one longitudinally traversing channel cavity 20a is preferably circular but may have any shape such as an elliptical shape or rectangular shape.

The optical cavity 20 comprises an entry 22 which is arranged adjacent to said second end 10b and has an exit 24 opposite to said entry. Between said entry 22 and said second end 10b, a coating layer may be provided. This coating layer may be a partially reflecting coating deposited to said second end 10b. Said coating layer may be adapted to improve the quality and contrast of the interferometric signal, i.e. the interferogram, of the Fabry-Perot optical sensor.

The optical cavity 20 is closed by a deformable membrane 30 arranged to said exit 24 and comprises a volume of air 50 situated to the side of said entry 22 and a volume of liquid 40 situated to the side of the deformable membrane 30. The liquid is in contact with said deformable membrane 30 so that said air volume 50 is in fluidic connection with said deformable membrane 30. The optical cavity 20 may be fixed to said second end 10b by gluing or by a splicing technique and if required spacers may be placed between the second face 10b and the entry 22. The optical cavity 20 and the optical fiber 10 may also be linked by an outside element such as a protection tube 12, which may be a capillary of or hollow fiber as illustrated in Fig.17. A protection tube is not absolutely necessary and may be avoided in case the outside diameter of the sensor must be as small as possible.

The closed optical cavity 20 arranged to said second end 10b defines a waveguide sensor tip. By the change of a physical parameter outside said sensor tip such as for example a change of air pressure or a change of temperature or by applying a force or a vibration, the deformable membrane will undergo a deformation. The deformation of the deformable membrane 30 by the influence of the change of an outside physical parameter to the optical cavity will be transferred to said volume of liquid 40 and further transferred to said air volume which will undergo a compression or an expansion, depending if the deformable membrane 30 has expanded or contracted. When the physical parameter is changed to its initial values the membrane will find its initial shape it had before the change of the physical parameter.

In the case the sensor of the invention is used as a pressure sensor, the sensor is able to measure typical pressure changes ranging from 1 Pascal and up to several bars. In the case the sensor of the invention is used as a temperature sensor, the sensor is preferably used above the freezing point of the used liquid 40 and lower than the resistance temperature for the coating material and/or the vaporization temperature of liquid. In the case the sensor of the invention is used as a force sensor, the possible applied maximum force depends on the fiber tip sensor's mechanical resistance, but extreme low forces such as a few hundred mN, even of the order of µN, are typically measurable. When the optical sensor is not encapsulated, and forces are applied directly onto the deformable membrane, forces as low as pN or nN may be detected. Acoustic measurements are possible with the optical sensor of the invention and its design and its sensitivity is substantially similar to the one of a pressure optical sensor.

The optical cavity 20 comprises three reflecting surfaces, i.e. the interface between said second face 10b and the entry 22, the interface 44 between the air volume 50 and the liquid 40, and the reflection on the reflecting layer on the membrane.

In order to avoid having three interfaces, the Fabry Perot sensor may comprise in examples not covered by the present invention a reflecting element 70 inserted and positioned between the air volume 50 and the liquid volume as illustrated in Fig.18.The reflecting element 70 which acts as a piston may be a section of an optical fiber or may be made of a non-transparent material such as a metal. The reflecting element 70 may have a highly reflecting surface 70a to the side of said entry 22 and may have a coating to its side 70b of the liquid in order to enhance the contact to the liquid 40.

It is also possible to consider having a multi-sensor, made of a set of several Fabry-Perot sensors 1 as illustrated in Fig.5. Each of the Fabry-Perot optical sensors 1 may have different types of fiber 10 , and/or different types of optical cavities 20a-c and/or different types of deformable membranes 30a-c.

In a variant, a bundle of fibers comprising different fibers may face a single deformable membrane 30.

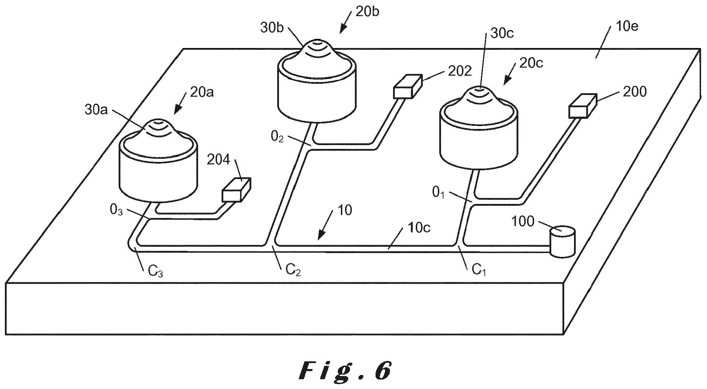

In a similar way a Fabry-Perot optical sensor 1 may be based on a substrate 10e comprising different types of waveguides on its surface, each waveguide being connected to different optical cavities as illustrated in Fig. 6.

The waveguides may comprise at least one light emitter 100, as illustrated in Fig. 6 and different types of incouplers C1, C2, C3 and different types of outcouplers O1, O2, O3. Each optical cavity may be associated to a detector 200, 202, 204 as illustrated in Fig.6. On such a substrate different waveguide paths may be provided, some of them may be connected to a referencing or calibrating sensor 202 as illustrated in Fig.3. As well as in the case of fiber waveguides or substrates comprising waveguides optical couplers may be provided to separate the incoming light beam and the retro reflected light beams such as illustrated in Fig.3 that shows a waveguide coupler 10f. Fig.3 illustrates also how an emitter 100 and an optical signal detector 200 may respectively be adapted to a first end 10a of the waveguide and a detection end 10g.

It is generally understood that the optical cavity 20 and at least a portion of the optical waveguide 10 may be protected by a protection material such as an encapsulant. Encapsulating techniques of fiber optical techniques and optical waveguides are well known from the skilled person and are not described here.

It is generally understood that any layer or structure that may improve the reliability and/or performance of the optical sensor of the invention may be situated in the Fabry-Perot optical sensor of the invention. For example in a variant said second surface 10b may be a curved surface. In another variant spacers may be provided between said second end 10b and said entry 22.

In another embodiment, the Fabry-Perot optical sensor 1 may be used as an actuator, by changing the physical property of the liquid 40 or air 50 by light absorption, changing as such their initial volume, inducing as such the deformation of the membrane 30. In that way, the amount of light could control the shape and the position of the membrane 30.

### Experimental results.

Experimental results of an exemplary realization in a fiber sensor according to the invention are described below.

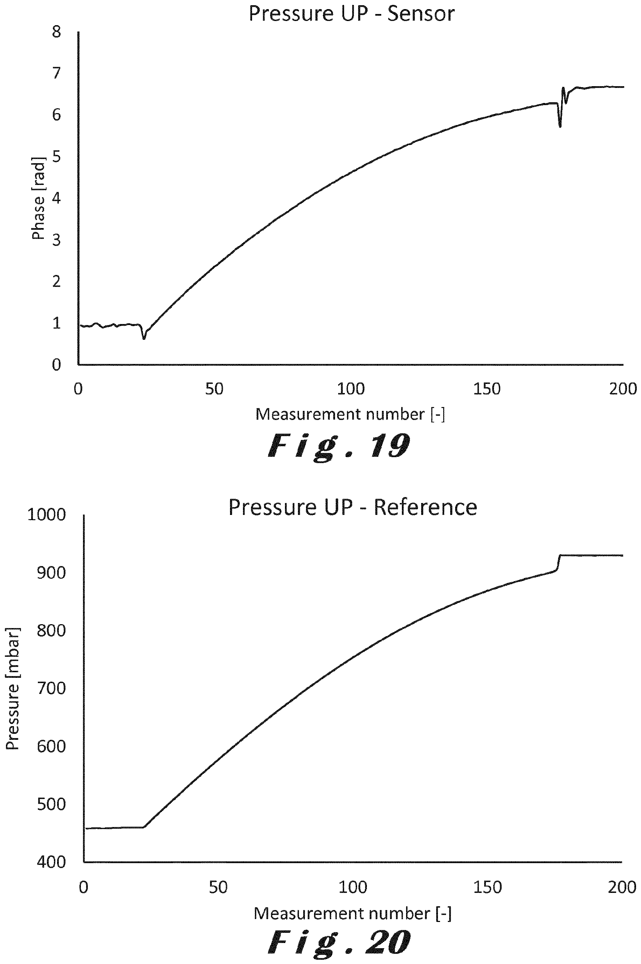

In a first example the Fabry-Perot optical sensor is a pressure sensor and comprises a standard G.652 single-mode fiber as the lead fiber. The cavity in that sensor is a capillary fiber 20 with a central hole having a cross section diameter of 15 µm and a length of 596 µm, defined from said entry 22 to said exit 24. The liquid 40 used is a silicone oil (Dow Corning DC 200/12'500). A parylene membrane has been deposited as said deformable membrane and has a thickness of typically 120 nm. In a variant the thickness may be between 50 nm and 250 nm, preferably between 80nm and 180nm. Fig. 19 shows a typical curve of the change of the phase of the optical signal obtained by a Fabry-Perot optical fiber sensor 1 as described in the embodiment of Fig. 1, in function of the change of the outside pressure of the fiber tip. Fig.20 shows a reference signal obtained by a calibrated pressure sensor.

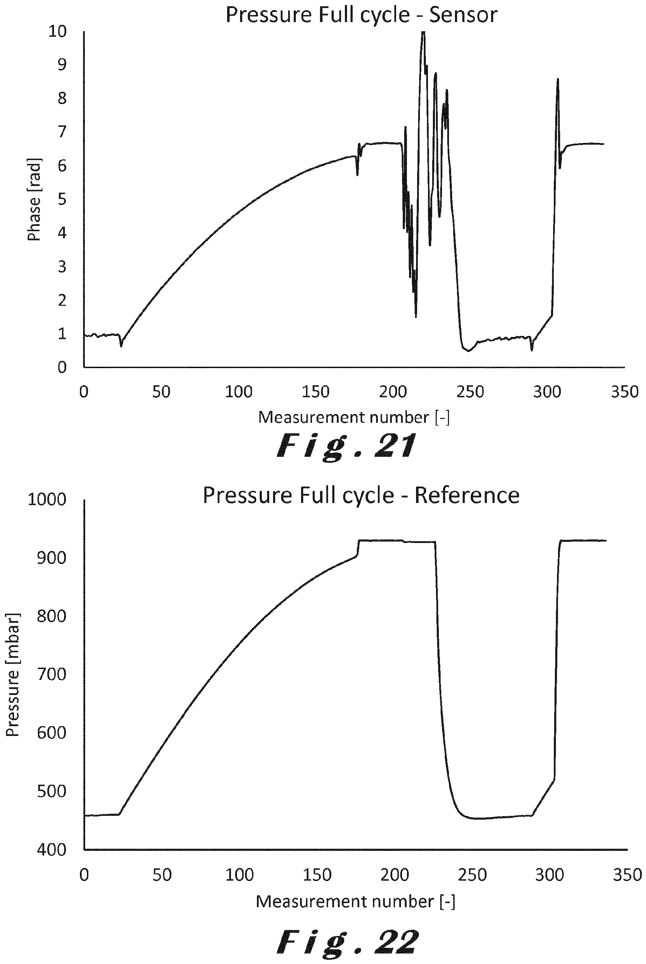

Fig.21 illustrates the phase signal upon applying a pressure cycle comprising a raising pressure and a lowering pressure to the deformable membrane 30. The noisy portion of the curve, before lowering of the pressure, is due to the air flow coming from outside the chamber, and is explained by the fact that the chamber joint was not yet fully stuck. Fig. 22 shows the corresponding signal obtained by a reference sensor.

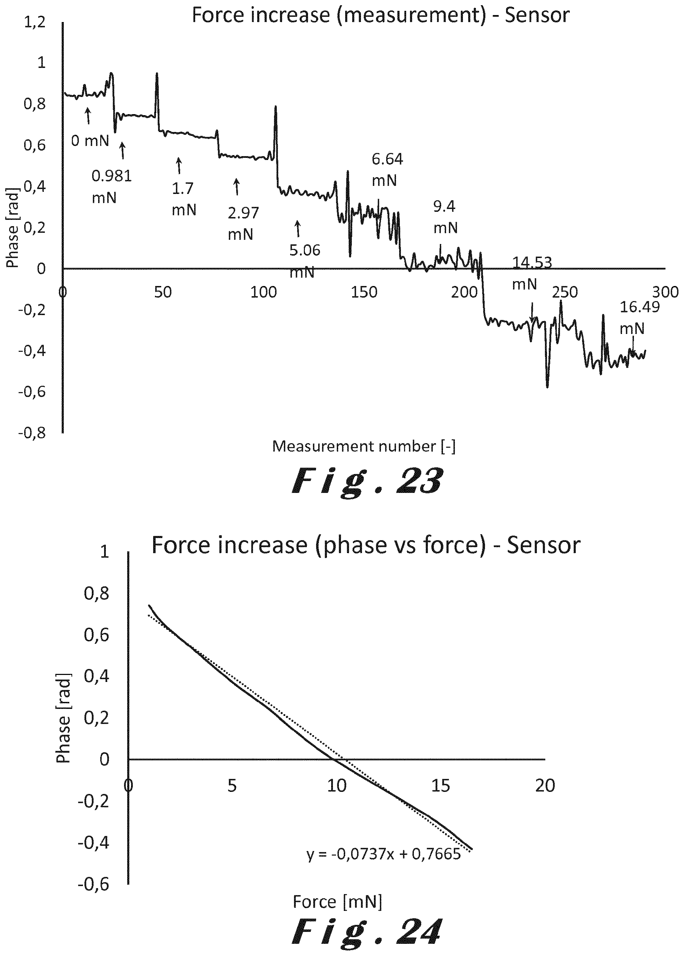

Fig.23 illustrates the phase signal upon applying different forces to the tip of another exemplary optical sensor of the invention. The lead optical fiber of the exemplary force sensor is a CL Micro 1550 21 type fiber from OFS and the optical cavity 20 is a hollow core fiber (HCF) whose central hole diameter is 10.4 µm and its length, between said entry 22 and exit 24, is 370 µm. Parylene membrane thickness is substantially 120 nm. In a variant the thickness may be between 50 nm and 250 nm, preferably between 80nm and 180nm. The used liquid is oil and is a Baysilone 1000m type oil. Said exemplary force Fabry-Perot optical sensor 10 is embedded with a silicone so that the completed deformable membrane has a thickness of about 100 µm. In a variant this thickness may be between 50 µm and 300 µm, preferably between 80 µm and 200 µm. This sensor was also used for the thermal response measurements.

Fig. 24 illustrates the linear relation between the applied force to the deformable membrane 30 compared to the change of optical phase detected by the described exemplary Fabry-Perot optical sensor used for said measurements shown in Fig.23

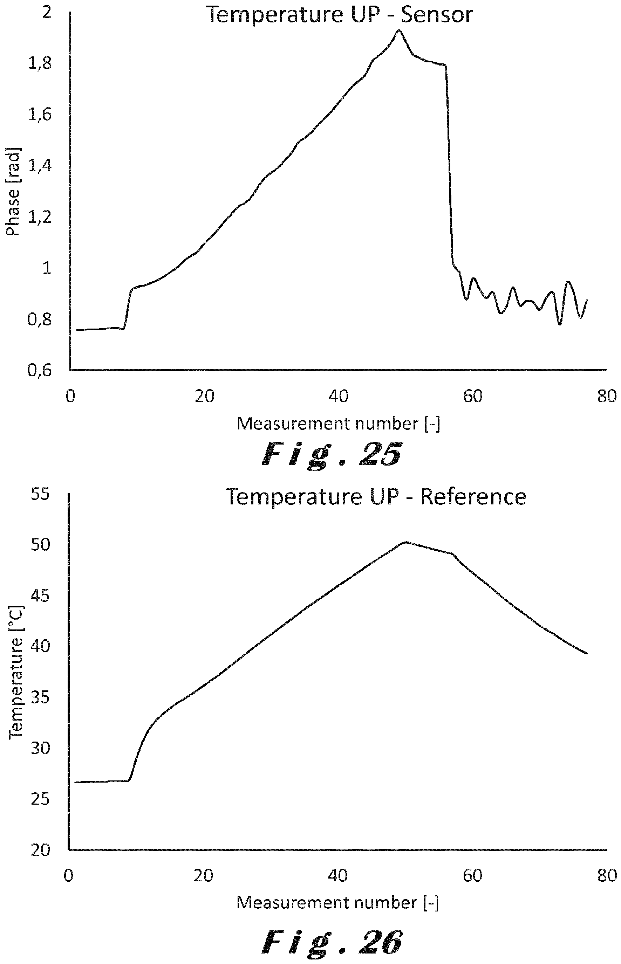

Fig.25 and Fig. 26 show the response of an exemplary Fabry-Perot optical sensor of the invention, respectively a reference sensor, in function of the raise of temperature outside the optical cavity. The used sensor is the described exemplary Fabry-Perot optical sensor used for said force measurements shown in Fig.23.

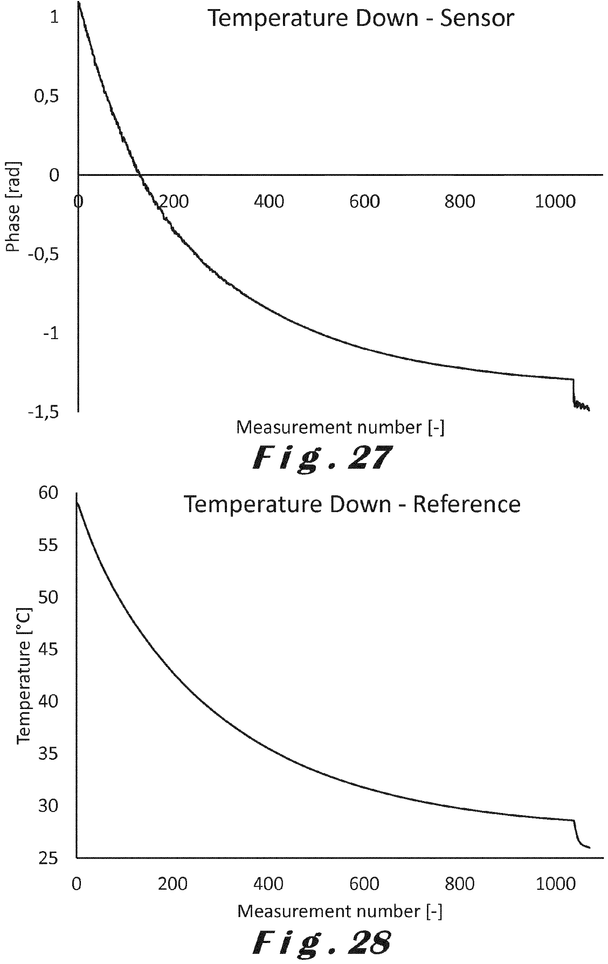

Fig.27 and Fig. 28 show the response of the optical sensor, respectively a reference sensor, in function of the lowering of temperature outside the optical cavity 20.

## Claims

1. A method for manufacturing a Fabry-Perot sensor comprising:
- an optical waveguide (10) with a first end (10b) adapted to receive a light source, and a second end (10a) opposite to the first end (10b);
- an optical cavity (20), adapted to said optical waveguide (10), with an entry (22) arranged adjacent to said second end (10a) so as to receive an incident light beam from the optical waveguide (10), the optical cavity (20) having an exit (24) situated opposite to the entry (22), and closed by a deformable membrane (30),
said method comprising for the fabrication of said deformable membrane (30) the steps of:
- adhering a liquid drop (40) to said exit (24) such that it provides a convex surface (40b) protruding outside the exit (24);
- depositing said deformable membrane (30) by a solid-on-liquid deposition technique on said convex surface (40b), the method being **characterised in that** it comprises the step of
- depositing a reflecting layer (32) on said deformable membrane (30) to the side away from said liquid drop (40).

2. The method according to claim 1 in that said deformable membrane (30) is a parylene membrane deposited by vapor deposition.

3. The method according to claim 1 or 2, **characterized in that** the optical cavity (20) comprises a capillary hollow core (20a) defining said exit (24), said capillary hollow core diameter being sized in reference to the liquid viscosity such that said liquid can be sucked at least partially inside the capillary hollow core and form said convex surface (40b).

4. The method according to one of claims 1 to 3, **characterized in that** said step of adhering a liquid drop (40) is carried out by
- dipping a rod into a liquid so as to provide a quantity of liquid onto a first face of said rod;
- aligning and moving said first end of said rod to said exit until said liquid (40) is in contact with said exit (24) and is sucked inside the capillary hollow core (20a) and removing said rod.

5. The method according to one of the claims 3 or 4, **characterized in that** the optical waveguide (10) is an optical fiber which is assembled to the capillary hollow core (20a) with the following steps:
- providing a cleaved optical fiber (10) with a cleaved end (10a);
- providing a protective tube (12) which is sized such that the optical fiber can be inserted into it;
- inserting said cleaved end (10a) of the optical fiber into said protective tube (12) over a predetermined distance;
- moving the protective tube (12) in the direction of said first face and to a predetermined position such that the cleaved end is outside the protective tube, and;
- providing said optical cavity (20);
- aligning and fusion splicing said entry (22) to said cleaved end (10a), providing a fusion splice;
- moving said protective tube (12) such that the protective tube (12) covers said fusion splice and fixing said protective tube (12) to said optical fiber.

6. The method according to claim 5, wherein said optical cavity (20) is furthermore cleaved at a predetermined position to adjust the length of the optical cavity (20).

7. The method according to claim 5 or 6, **characterized in that** said protective tube (12) is a glass tube.

8. The method according to claim 5 or 6, **characterized in that** said protective tube (12) is a ceramic tube.

9. A Fabry-Perot optical sensor (1), obtainable by a method according to one of claims 1 to 8 comprising:
- an optical waveguide (10) with a first end (10a) adapted to receive a light source, and a second end (10b) opposite to the first end (10a);
- an optical cavity (20) with an entry (22) arranged adjacent to said second end (10b) so as to receive an incident light beam from the optical waveguide (10), the optical cavity (20) having an exit (24) situated opposite to the entry (22),
- said optical cavity (20) comprising at least a longitudinally traversing hollow core (20a) connecting said entry (22) and said exit (24), said hollow core comprising a volume of air (50) situated to the side and in contact with said entry (22), and a volume of liquid (40) in contact with said volume of air (50) and to the side opposite to said entry (22), and a deformable membrane (30) deposited on said volume of liquid, to the side opposite to said volume of air (50), said deformable membrane closing said exit (24), the Fabry-Perot optical sensor being **characterised in that**
- said optical cavity (20) comprises a reflecting layer (32b) that is arranged on said deformable membrane (30), to the side opposite to said liquid (40), said reflecting layer (32b) being arranged to reflect at least partially incident light on said reflecting layer (32b) , said incident light being transmitted from said entry (22) to said reflecting layer (32b) through said optical cavity (20).

10. The Fabry-Perot optical sensor (1) according to claim 9 **characterized in that** said liquid (40) is oil.

11. The Fabry-Perot optical sensor (1) according to claim 9 or 10, **characterized in that** said deformable membrane (30) is made of parylene.

12. The Fabry-Perot optical sensor (1) according to any one of claims 9-11, **characterized in that** said optical waveguide is an optical fiber.

13. The Fabry-Perot optical sensor (1) according to any one of claims 9-12, **characterized in that** said optical waveguide is arranged on a substantially flat substrate.

## Patentansprüche

1. Verfahren zur Herstellung eines Fabry-Pérot-Sensors, umfassend:
- einen optischen Wellenleiter (10) mit einem ersten Ende (10b), das zur Aufnahme einer Lichtquelle geeignet ist, und einem dem ersten Ende (10b) entgegengesetzten zweiten Ende (10a);
- einen optischen Resonator (20), der an den optischen Wellenleiter (10) angepasst ist, mit einem Eingang (22), der angrenzend an das zweite Ende (10a) angeordnet ist, um einen einfallenden Lichtstrahl von dem optischen Wellenleiter (10) zu empfangen, wobei der optische Resonator (20) einen Ausgang (24) hat, der dem Eingang (22) gegenüberliegt und durch eine verformbare Membran (30) verschlossen ist,
wobei das Verfahren zum Herstellen der verformbaren Membran (30) folgende Schritte umfasst:
- Anbringen eines Flüssigkeitstropfens (40) an dem Ausgang (24) derart, dass er eine konvexe Oberfläche (40b) bereitstellt, die von dem Ausgang (24) nach außen vorsteht;
- Aufbringen der verformbaren Membran (30) auf die konvexe Oberfläche (40b) mit einer Fest-auf-Flüssig-Abscheidetechnik, wobei das Verfahren **dadurch gekennzeichnet ist, dass** es den folgenden Schritt umfasst:
- Aufbringen einer reflektierenden Schicht (32) auf die verformbare Membran (30) auf der vom Flüssigkeitstropfen (40) abgewandten Seite.

2. Verfahren nach Anspruch 1, **dadurch gekennzeichnet, dass** die verformbare Membran (30) eine durch Gasphasenabscheidung aufgebrachte Parylenmembran ist.

3. Verfahren nach Anspruch 1 oder 2, **dadurch gekennzeichnet, dass** der optische Resonator (20) einen kapillaren Hohlkern (20a) umfasst, der den Ausgang (24) definiert, wobei der Durchmesser des kapillaren Hohlkerns unter Bezugnahme auf die Viskosität der Flüssigkeit derart bemessen ist, dass die Flüssigkeit zumindest teilweise in den kapillaren Hohlkern gesaugt werden und die konvexe Oberfläche (40b) bilden kann.

4. Verfahren nach einem der Ansprüche 1 bis 3, **dadurch gekennzeichnet, dass** der Schritt des Anbringens eines Flüssigkeitstropfens (40) ausgeführt wird durch
- Eintauchen eines Stabs in eine Flüssigkeit, um eine Flüssigkeitsmenge auf einer ersten Stirnfläche des Stabs bereitzustellen;
- Ausrichten und Bewegen des ersten Endes des Stabs zu dem Ausgang, bis die Flüssigkeit (40) mit dem Ausgang (24) in Kontakt kommt und in den kapillaren Hohlkern (20a) gesaugt wird, und Entfernen des Stabs.

5. Verfahren nach einem der Ansprüche 3 oder 4, **dadurch gekennzeichnet, dass** der optische Wellenleiter (10) ein Lichtwellenleiter ist, der mit den folgenden Schritten mit dem kapillaren Hohlkern (20a) zusammengefügt wird:
- Bereitstellen eines gecleavten Lichtwellenleiters (10) mit einem gecleavten Ende (10a);
- Bereitstellen eines Schutzrohrs (12), das derart bemessen ist, dass der Lichtwellenleiter darin eingeführt werden kann;
- Einführen des gecleavten Endes (10a) des Lichtwellenleiters in das Schutzrohr (12) über eine vorbestimmte Distanz;
- Bewegen des Schutzrohrs (12) in die Richtung der ersten Stirnfläche und zu einer vorbestimmten Position derart, dass sich das gecleavte Ende außerhalb des Schutzrohrs befindet, und;
- Bereitstellen des optischen Resonators (20);
- Ausrichten und Schmelz-Spleißen des Eingangs (22) mit dem gecleavten Ende (10a), wodurch ein Schmelz-Spleiß bereitgestellt wird;
- Bewegen des Schutzrohrs (12) derart, dass das Schutzrohr (12) den Schmelz-Spleiß bedeckt, und Fixieren des Schutzrohrs (12) an dem Lichtwellenleiter.

6. Verfahren nach Anspruch 5, wobei der optische Resonator (20) an einer vorbestimmten Stelle zusätzlich gecleavt wird, um die Länge des optischen Resonators (20) anzupassen.

7. Verfahren nach Anspruch 5 oder 6, **dadurch gekennzeichnet, dass** das Schutzrohr (12) ein Glasrohr ist.

8. Verfahren nach Anspruch 5 oder 6, **dadurch gekennzeichnet, dass** das Schutzrohr (12) ein Keramikrohr ist.

9. Optischer Fabry-Pérot-Sensor (1), der durch ein Verfahren nach einem der Ansprüche 1 bis 8 erhalten werden kann, umfassend:
- einen optischen Wellenleiter (10) mit einem ersten Ende (10a), das zur Aufnahme einer Lichtquelle geeignet ist, und einem dem ersten Ende (10a) entgegengesetzten zweiten Ende (10b) ;
- einen optischen Resonator (20) mit einem Eingang (22), der angrenzend an das zweite Ende (10b) angeordnet ist, um einen einfallenden Lichtstrahl von dem optischen Wellenleiter (10) zu empfangen, wobei der optische Resonator (20) einen Ausgang (24) hat, der dem Eingang (22) gegenüberliegt,
- wobei der optische Resonator (20) mindestens einen in Längsrichtung durchquerenden Hohlkern (20a) umfasst, der den Eingang (22) und den Ausgang (24) verbindet, wobei der Hohlkern ein Luftvolumen (50), das sich seitlich des Eingangs (22) und in Kontakt mit ihm befindet, und ein Flüssigkeitsvolumen (40) in Kontakt mit dem Luftvolumen (50) und auf der dem Eingang (22) entgegengesetzten Seite und eine auf das Flüssigkeitsvolumen aufgebrachte verformbare Membran (30) auf der dem Luftvolumen (50) entgegengesetzten Seite umfasst, wobei die verformbare Membran den Ausgang (24) verschließt, wobei der optische Fabry-Pérot-Sensor **dadurch gekennzeichnet ist, dass**
- der optische Resonator (20) eine reflektierende Schicht (32b) umfasst, die auf der verformbaren Membran (30) auf der der Flüssigkeit (40) entgegengesetzten Seite angeordnet ist, wobei die reflektierende Schicht (32b) dazu eingerichtet ist, auf die reflektierende Schicht (32b) einfallendes Licht zumindest teilweise zu reflektieren, wobei das einfallende Licht von dem Eingang (22) durch den optischen Resonator (20) zu der reflektierenden Schicht (32b) übertragen wird.

10. Optischer Fabry-Pérot-Sensor (1) nach Anspruch 9, **dadurch gekennzeichnet, dass** die Flüssigkeit (40) Öl ist.

11. Optischer Fabry-Pérot-Sensor (1) nach Anspruch 9 oder 10, **dadurch gekennzeichnet, dass** die verformbare Membran (30) aus Parylen besteht.

12. Optischer Fabry-Pérot-Sensor (1) nach einem der Ansprüche 9 bis 11, **dadurch gekennzeichnet, dass** der optische Wellenleiter ein Lichtwellenleiter ist.

13. Optischer Fabry-Pérot-Sensor (1) nach einem der Ansprüche 9 bis 12, **dadurch gekennzeichnet, dass** der optische Wellenleiter auf einem im Wesentlichen flachen Substrat angeordnet ist.

## Revendications

1. Procédé de fabrication d'un capteur de Fabry-Perot comprenant :
- un guide d'onde optique (10) présentant une première extrémité (10b) conçue pour recevoir une source de lumière et une seconde extrémité (10a) opposée à la première extrémité (10b) ;
- une cavité optique (20), adaptée audit guide d'onde optique (10), présentant une entrée (22) agencée à côté à ladite seconde extrémité (10a) de façon à recevoir un faisceau lumineux incident provenant du guide d'onde optique (10), la cavité optique (20) présentant une sortie (24) située à l'opposé de l'entrée (22) et étant fermée par une membrane déformable (30),
ledit procédé comprenant, pour la fabrication de ladite membrane déformable (30), les étapes de :
- adhérence d'une goutte de liquide (40) à ladite sortie (24) de telle sorte qu'elle fournit une surface convexe (40b) faisant saillie à l'extérieur de la sortie (24) ;
- dépôt de ladite membrane déformable (30) par une technique de dépôt solide-sur-liquide sur ladite surface convexe (40b), le procédé étant **caractérisé en ce qu'**il comprend l'étape de
- dépôt d'une couche réfléchissante (32) sur ladite membrane déformable (30) sur le côté à l'opposé de ladite goutte de liquide (40).

2. Procédé selon la revendication 1, **caractérisé en ce que** ladite membrane déformable (30) est une membrane de parylène déposée par dépôt en phase vapeur.

3. Procédé selon la revendication 1 ou 2, **caractérisé en ce que** la cavité optique (20) comprend un coeur creux capillaire (20a) définissant ladite sortie (24), ledit diamètre de coeur creux capillaire étant dimensionné en référence à la viscosité du liquide de telle sorte que ledit liquide peut être aspiré au moins partiellement à l'intérieur du coeur creux capillaire et former ladite surface convexe (40b).

4. Procédé selon l'une des revendications 1 à 3, **caractérisé en ce que** ladite étape d'adhérence d'une goutte de liquide (40) est réalisée par
- trempage d'une tige dans un liquide de manière à fournir une quantité de liquide sur une première face de ladite tige ;
- alignement et déplacement de ladite première extrémité de ladite tige vers ladite sortie jusqu'à ce que ledit liquide (40) soit en contact avec ladite sortie (24) et soit aspiré à l'intérieur du coeur creux capillaire (20a) et retrait de ladite tige.

5. Procédé selon l'une des revendications 3 ou 4, **caractérisé en ce que** le guide d'onde optique (10) est une fibre optique qui est assemblée au coeur creux capillaire (20a) par les étapes suivantes de :
- fourniture d'une fibre optique clivée (10) pourvue d'une extrémité clivée (10a) ;
- fourniture d'un tube de protection (12) qui est dimensionné de telle sorte que la fibre optique peut être insérée dans celui-ci ;
- insertion de ladite extrémité clivée (10a) de la fibre optique dans ledit tube de protection (12) sur une distance prédéterminée ;
- déplacement du tube de protection (12) dans la direction de ladite première face et vers une position prédéterminée de telle sorte que l'extrémité clivée se trouve à l'extérieur du tube de protection et ;
- fourniture de ladite cavité optique (20) ;
- alignement et épissage par fusion de ladite entrée (22) sur ladite extrémité clivée (10a), fournissant une épissure par fusion ;
- déplacement dudit tube de protection (12) de telle sorte que le tube de protection (12) recouvre ladite épissure par fusion et fixation dudit tube de protection (12) à ladite fibre optique.

6. Procédé selon la revendication 5, ladite cavité optique (20) étant en outre clivée en une position prédéterminée pour ajuster la longueur de la cavité optique (20).

7. Procédé selon la revendication 5 ou 6, **caractérisé en ce que** ledit tube de protection (12) est un tube de verre.

8. Procédé selon la revendication 5 ou 6, **caractérisé en ce que** ledit tube de protection (12) est un tube céramique.

9. Capteur optique de Fabry-Perot (1), pouvant être obtenu par un procédé selon l'une des revendications 1 à 8, comprenant :
- un guide d'onde optique (10) présentant une première extrémité (10a) conçue pour recevoir une source de lumière et une seconde extrémité (10b) opposée à la première extrémité (10a) ;
- une cavité optique (20) présentant une entrée (22) agencée à côté de ladite seconde extrémité (10b) de façon à recevoir un faisceau lumineux incident provenant du guide d'onde optique (10), la cavité optique (20) présentant une sortie (24) située à l'opposé de l'entrée (22),
- ladite cavité optique (20) comprenant au moins un coeur creux traversant longitudinalement (20a) reliant ladite entrée (22) et ladite sortie (24), ledit coeur creux comprenant un volume d'air (50) situé sur le côté de et en contact avec ladite entrée (22) et un volume de liquide (40) en contact avec ledit volume d'air (50) et sur le côté opposé à ladite entrée (22) et une membrane déformable (30) déposée sur ledit volume de liquide, sur le côté opposé audit volume d'air (50), ladite membrane déformable fermant ladite sortie (24), le capteur optique de Fabry-Perot étant **caractérisé en ce que**
- ladite cavité optique (20) comprend une couche réfléchissante (32b) qui est agencée sur ladite membrane déformable (30), sur le côté opposé audit liquide (40), ladite couche réfléchissante (32b) étant agencée pour réfléchir au moins partiellement la lumière incidente sur ladite couche réfléchissante (32b), ladite lumière incidente étant transmise à partir de ladite entrée (22) à ladite couche réfléchissante (32b) à travers ladite cavité optique (20).

10. Capteur optique de Fabry-Pérot (1) selon la revendication 9, **caractérisé en ce que** ledit liquide (40) est de l'huile.

11. Capteur optique Fabry-Perot (1) selon la revendication 9 ou 10, **caractérisé en ce que** ladite membrane déformable (30) est en parylène.

12. Capteur optique de Fabry-Perot (1) selon l'une des revendications 9 à 11, **caractérisé en ce que** ledit guide d'onde optique est une fibre optique.

13. Capteur optique de Fabry-Perot (1) selon l'une des revendications 9 à 12, **caractérisé en ce que** ledit guide d'onde optique est agencé sur un substrat sensiblement plat.
